Europäisches Patentamt

European Patent Office

Office européen des brevets

(19)

(11) Publication number: **0 179 649**
**A2**

## (12) EUROPEAN PATENT APPLICATION

(21) Application number: 85307611.5

(22) Date of filing: 22.10.85

(51) Int. Cl.⁴: **C 04 B 35/14**
**B 22 C 1/00**

(30) Priority: 24.10.84 GB 8426837

(43) Date of publication of application:
30.04.86 Bulletin 86/18

(84) Designated Contracting States:
BE DE FR GB IT

(71) Applicant: FAIREY INDUSTRIAL CERAMICS LIMITED

Stone Staffordshire, ST15 OPU(GB)

(72) Inventor: Zandian, Vahid
14, Kingsfield Oval Basford
Stoke-on-Trent Staffordshire ST4 6HW(GB)

(72) Inventor: Taylor, Derek
15, Leigh Road Buglawton
Congleton Cheshire(GB)

(74) Representative: Votier, Sidney David et al,
CARPMAELS & RANSFORD 43, Bloomsbury Square
London WC1A 2RA(GB)

(54) Ceramic materials.

(57) There are described materials for use in the manufacture of cores, moulds and strongbacks, the cores, moulds or strongbacks comprising shaped and fired bodies of fused silica containing cristobalite homogeneously dispersed throughout. Such bodies are suitably made from a composition comprising fused silica powder and a devitrification aid containing an alkali metal compound in which the alkali metal compound is dispersed in the fused silica by adding it in an organic phase.

Such cores, moulds and strongbacks are particularly suitable for use in the high temperature casting of alloys, especially single crystal casting and the casting of directionally-solidified and eutectic alloys.

EP 0 179 649 A2

"CERAMIC MATERIALS" · 0179649

This invention relates to ceramic materials, and is especially concerned with materials for use in the manufacture of cores, moulds, and strongbacks in the high temperature casting of alloys, especially single crystal casting and the casting of directionally solidified and eutectic alloys.

It is known to use fused silica or fused silica/zircon/alumina compositions for the production of cores and moulds for the casting of alloys melting up to and around 1500°C. Above this temperature, however, such compositions exhibit physical characteristics which render them of limited use. In particular, the mechanical integrity of a fused silica core is reduced as the melting point of silica (about 1723°C) is approached. Also, at such temperatures undesirable reactions may be evident with the alloy metals being cast.

Cores for use in single crystal casting are expected to withstand temperatures up to 1650°C for substantial periods of time. With eutectic alloys the alloy is cast at temperatures around 1700°C for periods up to 24 hours or more. Previous and conventional fused silica cores, if maintained at temperatures in excess of 1500°C for any length of time, tend to sag and distort. This is clearly unsatisfactory, and an object of the present invention is to provide materials which will withstand the sort of temperatures experienced in single crystal and other high temperature casting techniques without sagging or distortion. It is a further object of the invention to provide compositions from which cores, moulds and strongbacks (see "Aviation Week and Space Technology, December 3. 1979, p7.) may be produced, which have certain physical and chemical properties, namely (i) adequate room temperature bending strength, e.g. 1000 to 4000 p.s.i;.    (ii) adequate hot bending strength; (iii) adequate leaching in hot aqueous alkaline solutions; (iv) chemical inertness with respect to the molten alloy being cast;  and (v) refractoriness sufficient to withstand  casting temperatures up to and in excess of 1600°C.

It has been found that cores consisting of fused silica with a proportion of cristobalite formed by partial devitrification of the fused silica exhibit enhanced refractoriness.  It is possible to obtain a proportion of cristobalite in the fused silica by heating alone, but this is generally uncontrollable because of the unpredictable effects of small differencies in fine particle size silica contents.  A preferred method is to add to the fused silica powder a devitrification aid containing alkali metals such as potassium or sodium, for example fluospar or china clay, and then form cristobalite by heating.  A problem with this procedure is that it is difficult to disperse the sodium or potassium-containing materials in the fused silica and as a result heterogeneous cristobalite formation occurs.

The present invention seeks to overcome these difficulties and to provide refractory compositions suitable for the manufacture of cores, moulds and strongbacks, which can be used at high temperatures, especially for single crystal casting and other high temperature casting techniques.

In one aspect of the invention the invention provides a composition comprising fused silica of very high purity, i.e. (at least 99.5% pure).

In a further aspect of the invention a core, mould or strongback comprises a shaped and fired body of fused silica containing cristobalite homogeneously dispersed throughout it.  Such a body may suitably be made from a composition comprising fused silica powder and a devitrification aid containing an alkali metal compound in which the alkali metal compound is dispersed in the fused silica by adding it in an organic phase, e.g. using sodium alginate.

The core, mould or strongback preferably comprises a mass of fused silica particles wherein the particles have a substantially uniform surface layer of cristobalite One way of achieving this is through the use,for the production of the cores, moulds and strongbacks,of a composition comprising fused silica particles wherein a substantial proportion of the particles have a surface coating of an organic binder containing a devitrification aid. When the silica powder is formed into shape and fire. the organic binder burns off, leaving the grains of silica with a homogeneous coating of the devitrification aid. Further heating causes a surface layer of the silica grair to be devitrified and forms a surface layer of cristobalit This enables devitrification to be both controlled and homogeneous.

According to a yet further aspect of the invention a composition for the manufacture of cores, moulds and strongbacks comprises fused silica powder, preferably high purity fused silica powder, and small proportions, e.g. up to 10% by weight, of an inert or fugitive powder, e.g. a rare earth oxide, for example yttrium oxide of high purity, and/or graphite or carbon powder and/or silicon nitride and/or silicon carbide and/ or cristobalite.

By an "inert" powder we mean a powder that is not significantly reactive with fused silica at temperatures up to and including the temperature of use of the products, e.g. 1700°C or more. By a "fugitive" powder we mean a powder that is present during the shaping operation but which burns away during subsequent firing.

The inert or fugitive powder is preferably used in an amount up to 5% by weight.  These powdered materials, which are inert or fugitive with respect to the other components of the composition, are preferably as pure as possible and have a mean particle size of the order of 5 microns.

According to a further aspect of the invention, a composition suitable for the production of cores, moulds and strongbacks comprises  from 60 to 80% by weight fused silica powder, especially high purity fused silica powder, up to 15% by weight yttrium oxide powder, carbon or graphite powder, silicon nitride powder or silicon carbide powder, up to 0.2% by weight of an alkali metal in the form of a surface devitrification aid, and from 15 to 30% by weight of an organic binder.

A preferred devitrification aid is sodium alginate.

A preferred organic binder is one based on polyethylene glycol.

The compositions of the invention may all be readily moulded and fired in known manner to produce cores, moulds and strongbacks which may be used in casting procedures, especially single crystal casting, and the casting of directionally solidified and eutectic alloys, at temperatures substantially in excess of fused silica cores which are at present available. The cores etc., made using the compositions of the invention can readily be leached away from the cast alloy by means of hot aqueous alkaline solutions.

It is preferred that the cores etc., produced from compositions according to the invention should not contain more than about 35% by weight cristobalite.  The proportion of cristobalite in the moulded articles increases on heating and thus will increase in use, and indeed during the mould firing process prior to casting metal and during the stages of casting the cristobalite content increases to about 100%.  The cores and other moulded articles are thus at their most refractory state as the long time at metal casting temperature commences.

Cores etc., made using the compositions of the invention may be protected from the alloys with which they come into contact during use by applying to them a ceramic protective coating. Examples of protective coatings include yttrium oxide (yttria) and aluminium oxide (alumina).

The following Examples are given for the purpose of illustrating the invention.

Examples 1-9

A number of 6.0kg batch size injection moulding compounds were prepared in a Z-blade mixer, the compositions of the compounds being indicated in Table 1 below.

Table 1.　( % by weight )

| Example No | 1 | 2 | 3 | 4 | 5 | 6 | 7 | 8 | 9 |
|---|---|---|---|---|---|---|---|---|---|
| Fused Silica | 79 | 79 | 79 | 79 | 79 | 77.03 | 75.05 | 71.10 | 78.21 |
| Yttrium Oxide | 0.0 | 0.0 | 0.0 | 0.0 | 0.0 | 1.98 | 3.95 | 7.90 | 0.0 |
| Graphite Powder | 0.0 | 0.0 | 0.0 | 0.0 | 0.0 | 0.0 | 0.0 | 0.0 | 0.99 |
| Sodium Alginate | 0.13 | 0.25 | 0.38 | 0.50 | 0.25 | 0.25 | 0.25 | 0.25 | 0.37 |
| Organic Binder | 20.87 | 20.75 | 20.62 | 20.50 | 20.75 | 20.75 | 20.75 | 20.75 | 20.43 |

0179649

The binder is blended with the sodium alginate
before mixing with the other ingredients.

Test bars were moulded from each of the nine
composition and were set in alumina setting powder in
saggars. The saggars were fired in a laboratory kiln
for varying times at selected temperatures. The fired
properties determined on the test bars were room temperature bending strength and cristobalite content. An
assessment of the refractoriness of the fired test bars
was obtained by using a slump test. In this the test
bars were placed on a refractory block with 5 inches
of the test bars unsupported (2" on the left hand side
and 3" on the right hand side - see the accompanying
drawing) and they were heat-treated for 2 hours between
1600 and 1700°C.

The results of these tests are indicated in
Table 2.

Table 2.  Fired test bars properties of various mix compositions.

| Example No | Bending Strength (psi) | Cristobalite Content (%) | Refractoriness test At 1675°C At 1700°C | |
|---|---|---|---|---|
| 1 | 1480 | 12.0 | NO SLUMP | SOME SLUMP |
| 2 | 1486 | 22.0 | NO SLUMP | SOME SLUMP |
| 3 | 944 | 25.0 | NO SLUMP | SOME SLUMP |
| 4 | 700 | 30.0 | NO SLUMP | SOME SLUMP |
| 5 | 1710 | 30.0 | NO SLUMP | SOME SLUMP |
| 6 | 1414 | 24.0 | NO SLUMP | SOME SLUMP |
| 7 | 1207 | 23.0 | NO SLUMP | SOME SLUMP |
| 8 | 1091 | 16.0 | NO SLUMP | SOME SLUMP |

No significant deformation or distortion was observed at or below 1675°C, and at 1700°C some slight deformation was evident but complete deformation had not occurred, evidencing the high temperature stability of the materials.

## CLAIMS

1. Fused silica of at least 99.5% purity.

2. A core, mould or strongback comprising a shaped and fired body of fused silica containing cristobalite homogeneously dispersed throughout it.

3. A core, mould or strongback as claimed in claim 2, comprising a mass of fused silica particles wherein the particles have a substantially uniform surface layer of cristobalite.

4. A composition for the manufacture of cores, moulds and strongbacks comprising fused silica powder, and small proportions of an inert or fugitive powder.

5. A composition for the manufacture of cores, moulds and strongbacks comprising high purity fused silica powder and up to 10% by weight of a rare earth oxide and/or graphite or carbon powder and/or silicon nitride and/or silicon carbide and/or cristobalite.

6. A composition suitable for the production of cores, moulds and strongbacks comprising from 60 to 80% by weight fused silica powder, up to 15% by weight yttrium oxide powder, carbon or graphite powder, silicon nitride powder or silicon carbide powder, up to 0.2% by weight of an alkali metal in the form of a surface devitrification aid, and from 15 to 30% by weight of an organic binder.

7. A core, mould or strongback made from a composition comprising fused silica powder and a devitrification aid containing an alkali metal compound in which the alkali metal compound is dispersed in the fused silica by adding it in an organic phase.

No Slump

Some Slump

Complete Deformation

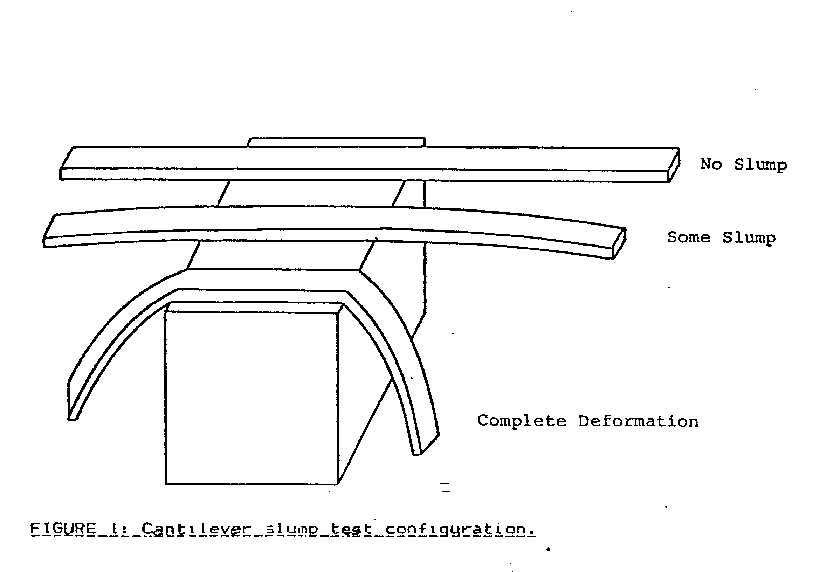

FIGURE 1: Cantilever slump test configuration.

0179649